# EUROPÄISCHE PATENTANMELDUNG

(11) **EP 1 508 886 A2**
(43) Veröffentlichungstag der Anmeldung: **23.02.2005**
(21) Anmeldenummer: 04019239.5
(22) Anmeldetag: 13.08.2004
(51) Int. Cl.: G08C 17/00, G07C 9/00, B60R 25/00

(54) **Hochfrequenzfunkeinrichtung für Kraftfahrzeuge**

(30) Priorität: 16.08.2003 DE 10337717
(71) Anmelder: Leopold Kostal GmbH & Co. KG, 58507 Lüdenscheid (DE)
(72) Erfinder: Vens, Rainer, 44139 Dortmund (DE); Pretzlaff, Volker, 58093 Hagen (DE); Fromm, Michael, 44289 Dortmund (DE)

(57) **Zusammenfassung**

Es wird eine Hochfrequenzfunkeinrichtung für Kraftfahrzeuge umfassend eine zur Kommunikation mit einem mobilen Transponder vorgesehene Hochfrequenz-Sende-/Empfangseinheit, der zumindest zwei an verschiedenen Orten im Kraftfahrzeug angeordnete Sende-/Empfangsantennen zugeordnet sind, vorgeschlagen.
Mit Hilfe der erfindungsgemäßen Einrichtung ist es möglich, auf Grundlage der zumindest zwei körperlich vorhandenen Antennen eine nahezu beliebige Anzahl weiterer Antennen-Charakteristiken bereitzustellen, um so die bei derartigen Einrichtungen insbesondere im Zusammenhang mit passiven Zugangs- und/oder Fahrberechtigungssystemen häufig auftretenden Probleme der Funkübertragung zu lösen.

## Beschreibung

Die Erfindung bezieht sich auf eine Hochfrequenzfunkeinrichtung für Kraftfahrzeuge umfassend eine zur Kommunikation mit einem mobilen Transponder vorgesehene Hochfrequenz-Sende-/Empfangseinheit, der zumindest zwei an verschiedenen Orten im Kraftfahrzeug angeordnete Sende-/Empfangsantennen zugeordnet sind.

Bei heutigen Kraftfahrzeugen werden vielfach drahtlose Telemetrie-Anwendungen wie Remote-Keyless-Entry (RKE), passive Zugangs- und Fahrberechtigungs-Systeme, Reifendruckkontroll-Systeme und ähnliche Anwendungen betrieben. Diese arbeiten üblicherweise auf UHF-Frequenzen in den sogenannten lizenzfreien ISM-Bändern (Industrial, Scientific, Medical) von z.B. 433MHz oder 868MHz.

Wie bei jeder drahtlosen Funkübertragung kann es natürlich auch bei Anwendungen im Kraftfahrzeug zu Störungen dieser Nachrichtenübermittlung kommen. Diese Störungen kommen dann zustande, wenn der Signal-Pegel am Empfänger zu schwach ist aufgrund eines zu hohen Abstandes zwischen Sender und Empfänger, oder aber wenn die Ausrichtung der Sende- und Empfangsantenne derart ungünstig ist, daß sich eine sehr hohe Übertragungs-Dämpfung ergibt.

In der Regel wird man natürlich versuchen, recht homogene Antennen auszubilden, welche in allen Richtungen gleichmäßig abstrahlen; dieses wird jedoch in der Praxis, vor allem auch bei Ein- oder Anbau in/an ein Kfz nicht gelingen. Vielmehr wird das Fahrzeug mit seiner Karosserie wesentlichen Einfluß aufdie Ausbreitungs-Eigenschaften der von einer Antenne ausgehenden elektromagnetischen Wellen nehmen, was dazu führt, daß in bestimmten Richtungen sich ausgesprochen starke Antennen-Keulen mit hohem Gewinn ausbreiten, in anderen Richtungen dagegen die Abstrahl-Effektivität stark abnimmt, und die Antenne hier einen sogenannten Einzug ausbilden wird. Erschwerend kommt hinzu, daß aus Kosten-, Platz- und Design-Gründen nicht beliebige Antennen-Arten für die Verwendung im/am Fahrzeug gewählt werden können, so daß auch ohne Einfluß des Fahrzeugs diese Antennen schon eine i.d.R. recht inhomogene Richt-Charakteristik ausbilden.
Natürlich wird sowohl auf der Sender-, als auch auf der Empfänger-Seite die gleiche Problematik auftreten. Sind nun die Sende- und die Empfangsantenne zufällig mit einer eher ungünstigen Antennen-Ausrichung aufeinander zugerichtet, so kann dieses durchaus zu einer derartigen Dämpfung des Signals führen, daß der Pegel am Empfänger zu schwach ist.

Eine weitere Erschwernis der drahtlosen Signalübertragung ist die sogenannte Mehrwege-Ausbreitung von Funksignalen. Damit bezeichnet man den Effekt, daß sich die elektromagnetische Welle von der Antenne nicht nur in eine bestimmte Richtung ausbreitet, sondern gemäß der o.g. Richt-charakteristik in mehrere Richtungen. Je nach Umgebung wird die Welle von Gegenständen reflektiert und gemäß den physikalischen Gesetzmäßigkeiten verändert. Betrachtet man nun das Eintreffen der Welle an der Empfangsantenne, so ist es logisch, daß die einfallende Welle des Senders den Empfänger nicht nur auf direktem Wege - in der sogenannten "Line of Sight" (LON) - erreicht, sondern daß auch Anteile von reflektierten Wellen empfangen werden, welche einen längeren Weg genommen haben und daher zeitverzögert eintreffen.

Dabei kann es durchaus zu Auslöschungs-Erscheinungen, dem sogenannten Fading, kommen. Damit bezeichnet man das gleichzeitige Eintreffen von Wellen-Anteilen, welche aufgrund teilweise erfahrener Reflexionen und Verzögerungen genau gegenphasig an der Empfangsantenne ankommen. Haben diese gegenphasigen Anteile zudem auch noch eine annähernd gleiche Amplitude, so werden sie sich aufgrund des Superpositionsprinzips auslöschen. Im Allgemeinen liegen nicht nur zwei Wellen-Anteile vor, sondern eine komplexe Konstellation vieler Wellen-Anteile mit verschiedenster Phasenlage und Amplitude. Dadurch sind unterschiedlich starke Abschwächungen des Signal-Pegels zu erwarten, so daß dieser für den Empfänger unter Umständen zu schwach sein kann, um noch ausgewertet zu werden.

Bezogen auf eine drahtlose Signalübertragung zwischen einem Kfz und einer Gegenstation, z.B. einem auch als ID-Geber bezeichneten mobilen Transponder, bedeutet dies, daß es aufgrund der oben genannten Phänomene zu starken Dämpfungen bzw. Auslöschungen des Signal kommen kann, die eine Störung der Übertragung nach sich führen, auch ohne Störungen von außen, z.B. durch starke Fremd-Sender.

Da in der Regel bereits bei kleinen Veränderungen der äußeren Gegebenheiten oder der Lage der beiden Stationen zueinander die Übertragung wieder ungestört ist, besteht eine einfache Lösung dieses Problems z.B. darin, das gesendete Datenwort pauschal mind. 2mal hintereinander zu senden, wenn davon ausgegangen werden kann, daß der mobile Transponder oder ID-Geber von seinem jeweiligen Benutzer getragen wird und dieser Benutzer und damit auch der ID-Geber sich normalerweise in Bewegung befindet, so daß die bei einem der nachfolgenden Übertragungsversuche eingetretene Änderung der relativen Lage der beiden Stationen zueinander eine Aufhebung des Störeinflusses bewirkt hat.

Bei sog. passiven Zugangs- und Fahrberechtigungssystemen ist es jedoch so, daß keine aktive Betätigung des ID-Gebers mehr erfolgen muß, sondern stattdessen eine eigenständige Abfrage des ID-Gebers vom Kfz erfolgt. Dabei muß der ID-Geber nicht zwangsläufig am Körper des Benutzers getragen werden, sondern kann sich auch durchaus in einer bewegungslosen Position z.B. im Innenraum des Fahrzeugs befinden, in der möglicherweise die gegenseitige Antennen-Charakteristik von Kfz und ID-Geber zueinander sehr ungünstig ist, oder es zu Fading-Effekten und dadurch zu einer gestörten Datenübertragung kommt. In diesem Falle wird auch eine beliebig häufige Wiederholung des Abfrage- oder Antwortsignals keine Verbesserung bringen.

Bei anderen Systemen, welche sich in Bewegung befinden, ist eine Wiederholung des Übertragungsversuchs wegen einmaliger Auslöschung etwa aufgrund der hohen Datenmenge und / oder aus zeitlichen Gründen nicht zweckmäßig.

Ausgehend von diesem Stand der Technik liegt der Erfindung daher die Aufgabe zugrunde, eine Hochfrequenzfunkeinrichtung für Kraftfahrzeuge zu schaffen, welche die genannten Nachteile des Standes der Technik überwindet und insbesondere auch bei passiven Zugangs- und Fahrberechtigungssystemen einsetzbar ist.

Diese Aufgabe wird dadurch gelöst, daß der Sende-/Empfangsbetrieb der Einrichtung wahlweise mit einer der Antennen oder mit zumindest zwei Antennen gleichzeitig durchführbar ist.

Mit Hilfe einer zweiten Antenne, welche sowohl auf der Sende- als auch auf der Empfangsseite verwendet werden kann, steht ein weiterer Übertragungs-Kanal zur Verfügung, wobei eine Wahrscheinlichkeit besteht, daß dieser Kanal nicht auch gestört ist, so daß nach Umschaltung auf diesen die Übertragung dann funktioniert. Unter Umständen kann es aber dazu kommen, daß auch dieser zweite Kanal keine gute Konstellation für eine drahtlose Datenübertragung darstellt.

Mit Hilfe der erfindungsgemäßen Einrichtung ist es nun möglich, auf Grundlage dieser zwei körperlich vorhandenen Antennen eine nahezu beliebige Anzahl weiterer Antennen-Charakteristiken bereitzustellen. Dies geschieht z.B. dadurch, daß man die beiden Antennen HF-gerecht zusammenschaltet, also z.B. über einen Leistungsteiler, einen sog. 3dB-Hybrid miteinander verbindet. Alternativ hierzu kann die Sende-/Empfangseinheit aber auch bereits mit zumindest zwei Ausgängen für zumindest zwei Antennen ausgerüstet sein, wobei die Verknüpfung der Signalpfade innerhalb der Sende-/Empfangseinheit erfolgt.

Eine solche Zusammenschaltung bzw. Kombination der beiden Antennen führt dabei zu einer Antennencharakteristik, welche einer dritten Antenne mit weitgehend anderen Eigenschaften als denjenigen der beiden Einzel-Antennen entspricht.

Die Gesamt-Charakteristik der Antenne ergibt sich aufgrund des Superpositionsprinzips, d.h. des Prinzip der Überlagerung bestimmter physikalischer Größen gleicher Art am gleichen Ort, wie z.B. die Überlagerung elektromagnetischer Wellen. Die Gesamt-Charakteristik muß dabei nicht zwangsläufig besser sein als die der Einzel-Antennen, jedoch kann es für selektive Bereiche, z.B. die Fahrertür, den Kofferraum oder aber den Innenraum gegenüber den Einzelantennen zu lokalen Ausbreitungs-Maxima kommen, die dann gezielt ausgewählt werden können.

Damit stehen bei zwei hardwaremäßig vorhandenen Antennen zumindest drei verschiedene Antennen-Charakteristiken zur Verfügung.

Durch eine Variation der Phasenlage eines der beiden ansteuernden Antennen-Signale, etwa mit Hilfe eines Phasenschiebers in einem der beiden Signalpfade, kann die Gesamt-Antennen-Charakteristik weiter verändert werden, so daß praktisch eine Auswahl aus einer Vielzahl von Antennen-Charakteristiken möglich ist.

Damit ist es beispielsweise auch möglich, durch fortgesetztes Ändern der Phasenlage eine bestmögliche Ausleuchtung des Innenraums oder aber des Bereichs der Fahrertür, d.h idealerweise ohne Einzüge zu realisieren, oder eine Konstellation zu realisieren, bei der sich eine möglichst homogene, d.h. also rundstrahlende Antennen-Charakteristik mit möglichst wenig Einzügen und Maxima ergibt.

Natürlich ist es auch möglich, durch Zufügung weiterer Antennen die Variationsmöglichkeiten der resultierenden "Gesamt-Antenne" noch zu erhöhen bzw. zu verbessern.

## Patentansprüche

1. Hochfrequenzfunkeinrichtung für Kraftfahrzeuge umfassend eine zur Kommunikation mit einem mobilen Transponder vorgesehene Hochfrequenz-Sende-/Empfangseinheit, der zumindest zwei an verschiedenen Orten im Kraftfahrzeug angeordnete Sende-/Empfangsantennen zugeordnet sind, **dadurch gekennzeichnet, daß** der Sende-/Empfangsbetrieb der Einrichtung wahlweise mit einer der Antennen oder mit zumindest zwei Antennen gleichzeitig durchführbar ist.

2. Hochfrequenzfunkeinrichtung nach Anspruch 1, **dadurch gekennzeichnet, daß** die Sende-/Empfangsantennen durch einen Leistungsteiler zusammengeschaltet sind.

3. Hochfrequenzfunkeinrichtung nach Anspruch 2, **dadurch gekennzeichnet, daß** als Leistungsteiler ein 3 dB-Hybrid eingesetzt ist.

4. Hochfrequenzfunkeinrichtung nach Anspruch 1, **dadurch gekennzeichnet, daß** die Sende-/ Empfangseinheit bereits zumindest zwei Ausgänge für zumindest zwei Antennen besitzt.

5. Hochfrequenzfunkeinrichtung nach einem der Ansprüche 1 bis 4, **dadurch gekennzeichnet, daß** im Signalpfad zumindest einer Antenne ein Hilfsmittel zur Einstellung der Phasenlage angeordnet ist.

6. Zugangs- und/oder Fahrberechtigungssystem mit einer Hochfrequenzfunkeinrichtung nach einem der Ansprüche 1 bis 5.

7. Zugangs- und/oder Fahrberechtigungssystem nach Anspruch 6, **dadurch gekennzeichnet daß** die Aktivierung des mobilen Transponders durch ein Abfragesignal der kraftfahrzeugseitigen Hochfrequenz-Sende-/Empfangseinheit vorgesehen ist.
